# EUROPÄISCHE PATENTSCHRIFT

(11) **EP 0 660 011 B1**
(45) Veröffentlichungstag und Bekanntmachung des Hinweises auf die Patenterteilung: **08.07.1998**
(21) Anmeldenummer: 94118291.7
(22) Anmeldetag: 21.11.1994
(51) Int. Cl.: F16H 45/02, B23K 20/12

(54) **Turbinenrad eines hydrodynamischen Drehmomentwandlers**
Hydrokinetic torque converter turbine wheel
Roue de turbine d'un convertisseur de couple

(30) Priorität: 24.12.1993 DE 4344562
(43) Veröffentlichungstag der Anmeldung: 28.06.1995
(73) Patentinhaber: DAIMLER-BENZ AKTIENGESELLSCHAFT, 70567 Stuttgart (DE)
(72) Erfinder: Wörner, Otto, D-72766 Reutlingen (DE); Reinhardt, Rudolf, D-73732 Esslingen (DE); Schultz, Heinz, D-73269 Hochdorf (DE)

(56) Entgegenhaltungen:
- EP-A- 0 486 755
- DE-A- 2 457 392
- FR-A- 2 314 838
- GB-A- 1 079 219
- US-A- 3 777 360
- US-A- 4 099 603
- US-A- 4 924 978
- US-A- 5 431 325
- SCHWEISSEN UND SCHNEIDEN, Bd. 11, 1968 Seiten 604-609, R.SCHAEFER & H.GHANEM 'Reibschweissen im Kraftfahrzeugbau'

## Beschreibung

Die Erfindung bezieht sich auf ein Turbinenrad eines hydrodynamischen Drehmomentwandlers nach dem Oberbegriff von Patentanspruch 1.

Ein Turbinenrad eines hydrodynamischen Drehmomentwandlers mit einer Überbrückungskupplung der eingangs genannten Art ist aus der US PS 4,924,978 bekannt. Bei diesem bekannten Drehmomentwandler ist der Flansch des Lamellenträgers durch einen Torsionsdämpfer mit der Nabe des Turbinenrades verbunden, wobei die Nabe an ihrem Außenrand auf jeder Stirnseite einen durch axiale Reduzierung ihres Querschnittes gebildeten Absatz aufweist, durch welchen jeweils ein radialer Befestigungsflansch des Turbinenrades und des Torsionsdämpfers gegenüber der Nabe zentriert ist, so daß eine gemeinsame Nietverbindung zwischen den beiden Befestigungsflanschen und der Nabe im Bereich des Außenrandes der letzteren verwendet werden kann.

Gegenstand der älteren auf die Anmelderin zurückgehenden deutschen Patentanmeldung P 43 42 439.2 (DE 43 42 439 A1) ist ebenfalls ein Turbinenrad der eingangs genannten Art, bei welchem die Nabe des Turbinenrades auf ihrer dem Turbinenrad zugekehrten Stirnseite bereits einen zur Drehachse des Turbinenrades konzentrischen axialen Ansatz aufweist, an welchem der radiale Befestigungsflansch der Außenschale des Turbinenrades festgelegt ist.

Bei dem zugehörigen Drehmomentwandler ist eine das zentripetal durchströmte Turbinenrad drehbar aufnehmende glockenförmige Gehäuseschale mit der Außenschale eines Pumpenrades druckdicht und bewegungsfest sowie mit dem Turbinenrad durch eine mittels eines Kupplungsstellgliedes der Axialkolbenbauart betätigbare Überbrückungskupplung verbunden. Die Kupplungslamellen der Überbrückungskupplung sind abwechselnd an zwei ringförmigen Lamellenträgern drehfest gehaltert, welche konzentrisch zur Wandlerdrehachse ausgerichtet sind. Bei diesem Drehmomentwandler wird eine störungsfreie Wärmeabführung angestrebt, damit eine feinfühlige, ganau dosierbare Steuerung des Kupplungsschlupfes der Überbrückungskupplung gewährleistet ist, welche an sich zur Kraftstoffersparnis verwendet ist, andererseits aber auch durch Einregelung eines bestimmten Schlupfzustandes die Übertragung von Drehmomentungleichförmigkeiten des Antriebsmotores auf den dem Drehmomentwandler im Kraftfluß nachgeordneten Antriebsstrang verhindern soll. Zu diesem Zweck ist bei dem Drehmomentwandler ein gehäuseinnerer Kupplungsraum vorgesehen, welcher in der einen Richtung der Wandlerdrehachse von einer radialen Abschlußwand der Gehäuseschale und in der entgegengesetzten Richtung durch das Turbinenrad begrenzt ist. Der Kupplungsraum weist an einer radial äußeren Stelle eine Strömungsverbindung mit einem Ringspalt zwischen dem Pumpenradaustritt und dem Turbinenradeintritt sowie an einer radial inneren Stelle eine Strömungsverbindung mit einer Wandlerrücklaufleitung auf. Die Lamellenträger sind mit radialen Durchflutungsöffnungen versehen und mit ihrer gesamten Länge quer in der zwischen den beiden Strömungsverbindungen sich einstellenden zentripetalen Strömung des Kupplungsraumes liegend angeordnet.

Bei hydrodynamischen Drehmomentwandlern ist es bekannt, die Überbrückungskupplung durch einen Torsionsschwingungsdämpfer mit der Nabe des Turbinenrades zu verbinden (DE 39 15 186 C1; JP 2-245562 A. in "Patents Abstr. of Japan, Sect.M.Vol.14 (1990), Nr. 572 (M-1061)"); bei einer dieser bekannten Ausführungen (JP 4-224354 A. in "Patents Abstr. of Japan, Sect.M.Vol.16 (1992), Nr. 576 (M-1345)") ist hierbei ein Flansch der Nabe in den Richtungen der Drehachse zwischen je einem Flansch des Torsionsschwingungsdämpfers und der Außenschale des Turbinenrades eingespannt.

Aus der KUKA Schrift Nr. 19 vom 10.1975 (Nachdruck aus der DE-Z MM Nr. 70/1975)) sind in mehr allgemeiner Art die Voraussetzungen und Möglichkeiten des Reibstumpfschweißens sowie die entsprechende Fügeteilvorbereitung bekannt. Danach soll sich das Verbinden von Teilen mit ungleichen Stoßstellenquerschnitten wie das Schweißen von Bolzen oder Rohren auf Bleche ohne Schwierigkeiten durchführen lassen. An den Fügeteilen müssten ebene oder bearbeitete Spannflächen genügender Größe vorhanden sein, damit sie positionsgenau und ausreichend fest eingespannt werden könnten. Als Anwendungsbeispiele sind u. a. Rotoren für Turbolader sowie Turbinenräder genannt.

Lt. DE-Z "Der Praktiker" Nr. 5,1971 - S. 5 (Nachdruck in KUKA Schrift "Entwicklung und Anwendung von Reibschweißmaschinen in Deutschland") sollen Fertigungsingenieure und Konstrukteure immer mehr an das Reibschweißen denken. Werkstücke würden auf das Verfahren hin umkonstruiert, Bearbeitungsfolge, Materialzugaben und Toleranzen würden umgestellt und somit weitere Voraussetzungen für die weitere Verwendung dieses schnellen und präzisen Schweißvorganges geschaffen.

In VDI-Z Bd. 128 (1986) Nr. 20 - Oktober, S. 801-812 wird darauf verwiesen, daß das Telespektrum u. a. Turbinenräder und Laufradkränze umfassen soll, und daß das Reibschweißen sich für die Herstellung hochpräziser Bauteile bewährt haben soll.

In DE-Z: Schweißen und Schneiden Jhrg. 20 (1968), H. 11, S. 604-608 ist dargelegt, daß das Reibschweißen als Fügeverfahren für Stumpfnähte sowohl fertigungstechnisch als auch schweißtechnisch gegenüber den hier bei einer Reihe von Kraftfahrzeugteilen benutzten Verbindungstechniken einige wesentliche Vorteile biete.

Die der vorliegenden Erfindung zugrunde liegende Aufgabe besteht im wesentlichen darin, das Turbinenrad in bezug auf seine drehfesten Verbindungen zwischen Außenschale, Nabe und Lamellenträger so zu gestalten, daß eine fertigungstechnisch einfache und kostenarme Herstellung für die Großserie ermöglicht wird.

Ausgehend von einem Turbinenrad nach dem Oberbegriff von Patentanspruch 1 ist die erläuterte Aufgabe gemäß der Erfindung in vorteilhafter Weise mit den kennzeichnenden Merkmalen von Patentanspruch 1 gelöst.

Bei dem Turbinenrad nach der Erfindung benötigen die drehfesten Verbindungen zwischen der Nabe einerseits und der Außenschale sowie dem Lamellenträger andererseits nur einen sehr beschränkten Bauraum.

Bei dem Turbinenrad nach der Erfindung kann die Reibschweißverbindung zwischen Nabe und Außenschale mit einem größeren Durchmesser in bezug auf die Wandlerdrehachse ausgeführt sein als die Reibschweißverbindung zwischen Nabe und Lamellenträger. Dadurch können beide Reibschweißverbindungen auf einer Schweißmaschine mit einer Universal-Aufnahme für Nabe und Lamellenträger hergestellt werden.

Bei dem Turbinenrad nach der Erfindung müssen die Fügeteile für das Reibschweißen nicht besonders bearbeitet sein. Die Genauigkeit hinsichtlich Mitten- und Planlaufabweichungen, Axiallänge etc. wird im wesentlichen von der Reibschweißmaschine und den Aufnahmen für die Fügeteile bestimmt.

Die Bearbeitungszeit beim Reibschweißen des Turbinenrades nach der Erfindung ist sehr kurz.

Bei dem Turbinenrad nach der Erfindung ist der Fügevorgang automatisierbar und das Verfahren nach der älteren Patentanmeldung P 43 41 954.2 anwendbar.

Bei dem Turbinenrad nach der Erfindung kann nach beendetem Schweißvorgang bezüglich der Verbindung Nabe-Außenschale die Aufnahme für die nun mit der Nabe verbundene Außenschale zurückgefahren und danach der Lamellenträger in der drehantreibbaren Universal-Aufnahme eingespannt werden, welche im vorangegangenen Schweißvorgang zur Halterung der Nabe eingesetzt war.

Bei dem Turbinenrad nach der Erfindung entfällt ein Verstärkungsblech, welches mit dem Flansch der Außenschale verlötet werden muß, wenn der Flansch der Nabe und der Flansch der Außenschale und der Flansch des Lamellenträgers durch eine gemeinsame Nietverbindung gegeneinander undrehbar festgelegt wären.

Am Ende des Reibschweißvorganges nach dem Erkalten bzw. während des Erkaltens der Schweißzone kann infolge der noch drehenden drehantreibbaren Aufnahme deren Koaxialität zur anderen Aufnahme aufgehoben werden. Dieser Koaxialitätsfehler ist umso größer, je elastischer der Maschinenrahmen zwischen den Aufnahmen ist. Diese Elastizitäten können durch den Einsatz einer Lageranordnung zur gegenseitigen Zentrierung der Aufnahmen in der Drehachsenmitte ausgeschaltet werden.

Zur Vermeidung von Koaxialitätsfehlern, welche durch den Temperaturgang der Schweißmaschine verursacht werden, kann zusätzlich zur gegenseitigen Zentrierung der Aufnahmen die Anordnung so getroffen sein, daß die Aufnahme für die Außenschale ein besonderes Adapterteil aufweist, welches gegenüber der Aufnahme bewegungsfest, jedoch in den zur Drehachse senkrechten Richtungen mit einer begrenzten Elastizität angeordnet und zur eigentlichen Halterung der Außenschale verwendet ist.

Die vorstehend erläuterten und weitere Ausgestaltungen der Erfindung sind Gegenstand der Unteransprüche.

Einzelheiten der Erfindung ergeben sich aus der nachstehenden auf die Zeichnung Bezug nehmenden Beschreibung sowohl eines Ausführungsbeispieles als auch von Vorrichtungsteilen für das zur Herstellung einsetzbare Reibschweißverfahren. In der Zeichnung bedeuten
- Fig. 1: einen Schnitt durch einen hydrodynamischen Drehmomentwandler mit einer Überbrückungskupplung und mit einem Turbinenrad nach der Erfindung in einer die Wandlerdrehachse enthaltenden Ebene,
- Fig. 2: einen Schnitt durch eine drehantreibbare Universal-Aufnahme einer Reibschweißmaschine zur Herstellung der Reibschweißverbindungen bei dem Turbinenrad von Fig. 1 in einer die Drehachse der Aufnahme enthaltenden Ebene, in einer ersten Arbeitsstellung gezeichnet,
- Fig. 3: eine der Fig. 2 entsprechende Darstellung der Universal-Aufnahme, in einer zweiten Arbeitsstellung gezeichnet, und
- Fig. 4: eine der Fig. 3 entsprechende Darstellung der Universal-Aufnahme in einer zweiten Ausführungsform.

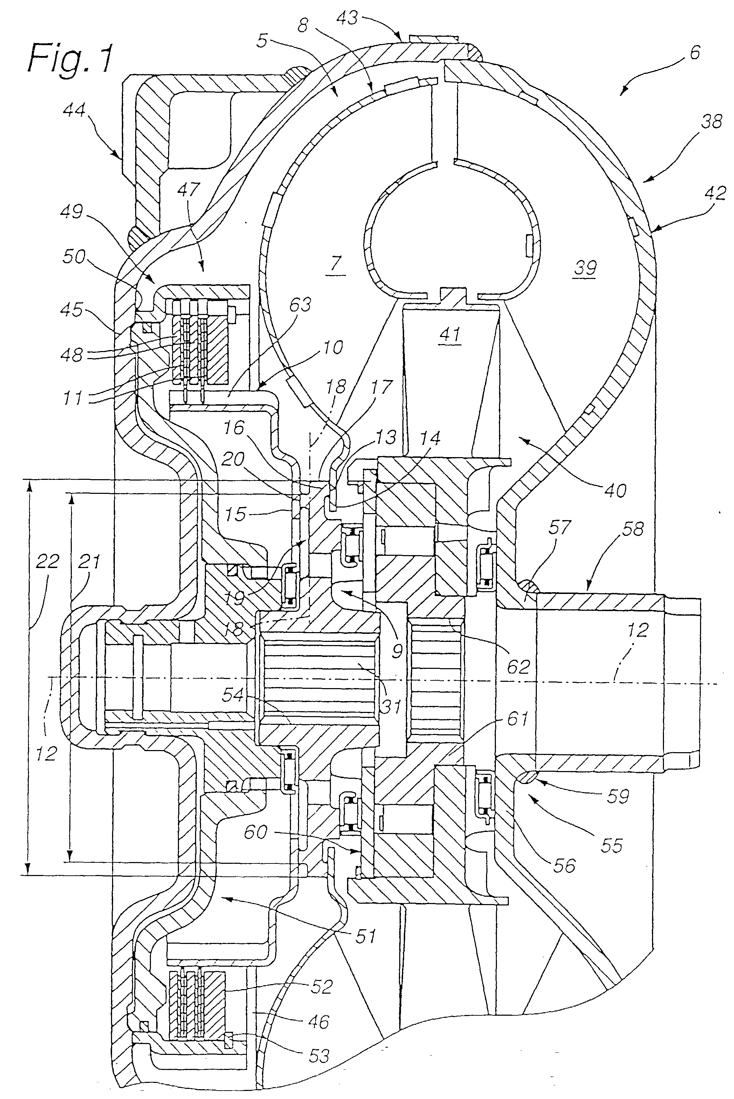

Unter Bezugnahme auf Fig. 1 weist ein hydrodynamischer Drehmomentwandler 6 ein Pumpenrad 38 mit Pumpenschaufeln 39, ein zentripetal durchströmtes Turbinenrad 5 mit Turbinenschaufeln 7 sowie ein Leitrad 40 mit Leitschaufeln 41 auf. Die Außenschale 42 des Pumpenrades 38 ist in der üblichen Weise mit einer das Turbinenrad 5 übergreifenden Gehäuseschale 43 druck- und bewegungsfest verbunden, welche äußere Befestigungsaugen 44 aufweist, über die das Pumpenrad 38 des Drehmomentwandlers 6 in bekannter Weise durch die Kurbelwelle eines Antriebsmotores eines Kraftfahrzeuges antreibbar ist.

Zwischen einer radialen Abschlußwand 45 der Gehäuseschale 43 und dem Turbinenrad 5 ist innerhalb der Gehäuseschale 43 ein Kupplungsraum 46 für die Anordnung einer Überbrückungskupplung 47 gebildet. Die Überbrückungskupplung 47 weist innere Kupplungslamellen 11 und äußere Kupplungslamellen 48 auf, die in bekannter Weise radial ineinander greifen. Die inneren Kupplungslamellen 11 sind an einem inneren Lamellenträger 10 drehfest und axial verschiebbar gehaltert, welcher einen gegenüber den Kupplungslamellen 11 in bezug auf die mit der Drehachse des Turbinenrades zusammenfallende Wandlerdrehachse 12-12 radial nach innen versetzt angeordneten Flansch 15 zur drehfesten Verbindung mit einer Nabe 9 des Turbinenrades 5 aufweist. Die äußeren Kupplungslamellen 48 sind an einem äußeren Lamellenträger 49 drehfest und axial verschiebbar gehaltert, welcher bei 50 durch eine Reibschweißverbindung an der radialen Abschlußwand 45 druck- und bewegungsfest gehaltert ist. Die Überbrückungskupplung 47 ist in bekannter Weise durch ein an der Abschlußwand 45 angeordnetes Kupplungsstellglied 51 der Axialkolbenbauart einrückbar, wobei die Kupplungslamellen 11, 48 über eine Widerlagerscheibe 52 an einem in eine innere Umfangsnut des äußeren Lamellenträgers 49 eingerasteten Sicherungsring 53 abstützbar sind.
Das Turbinenrad 5 weist eine die Turbinenschaufeln 7 an deren Außenkanten halternde Außenschale 8 auf, welche mit einem radial nach innen gerichteten Flansch 14 zur drehfesten Verbindung mit der Nabe 9 versehen ist.

Zu ihrer drehfesten Verbindung jeweils durch Reibschweißen mit der Außenschale 8 und dem Lamellenträger 10 ist die Nabe 9 an ihrem Außenumfang mit einem radialen Flansch 16 versehen, der radial durch einen zylindrischen Außenmantel 17 begrenzt wird. Der Flansch 16 weist auf seiner zur Abschlußwand 45 entgegengesetzten Stirnseite einen zur Wandlerdrehachse 12-12 konzentrischen axialen Ansatz 13 auf, welcher radial nach außen durch die Außenmantelfläche 17 begrenzt wird und mit dem Flansch 14 der Außenschale 8 durch eine Reibschweißverbindung bewegungsfest verbunden ist.

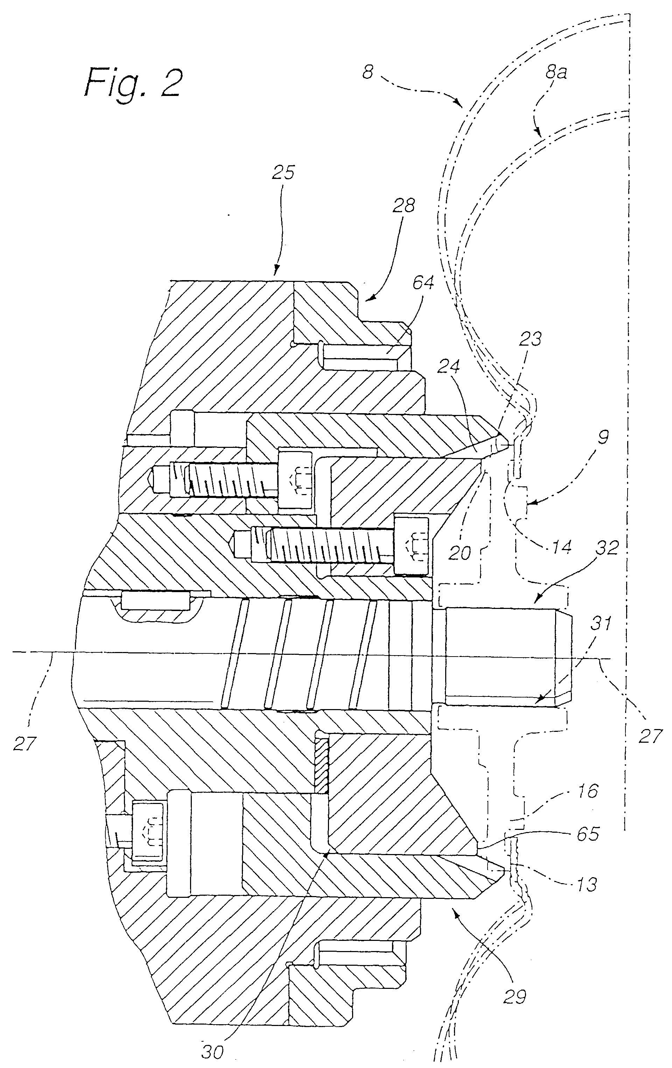

Der Flansch 16 der Nabe 9 wird in der auf die Abschlußwand 45 weisenden Richtung der Wandlerdrehachse 12-12 durch eine Stirnfläche 19 begrenzt, welche in einer zur Wandlerdrehachse 12-12 senkrechten Nabenebene 18-18 liegt und somit scharfkantig in die Außenmantelfläche 17 übergeht, so daß in diesem Übergangsbereich die teileseitigen Formschlußflächen 23 (Fign. 2 bis 4) beim Reibschweißen (Fügen der Teile 14 und 16) erzeugt werden können.

Von der Stirnfläche 19 geht in der auf die Abschlußwand 45 weisenden Richtung der Wandlerdrehachse 12-12 ein axialer Ansatz 20 ab, welcher zur Wandlerdrehachse 12-12 konzentrisch liegt und einen Außendurchmesser 21 aufweist, der kleiner als der Außendurchmesser 22 des Flansches 16 ist. Auf diese Weise ist der Ansatz 20, welcher mit dem Flansch 15 des Lamellenträgers 10 durch Reibschweißen verbunden ist, gegenüber dem Ansatz 13 radial nach innen versetzt, wodurch das Reibschweißen von Nabe 9 und Außenschale 8 einerseits sowie das Reibschweißen von Nabe 9 und Lamellenträger 10 andererseits mittels einer einzigen Universal-Aufnahme 25 (Fign. 2 bis 4) für Nabe und Lamellenträger ermöglicht ist.

Die beim Anformen der teileseitigen Formschlussflächen 23 resultierenden zentripetalen Kraftkomponenten im Übergangsbereich zwischen Außenmantelfläche 13 und Stirnfläche 19 können nicht zu Verformungen des Flansches 16 führen, weil letzterer gegenüber der Stirnfläche 19 hinterschneidungsfrei ist.

Zur üblichen drehfesten Verbindung des Turbinenrades 5 mit einer nicht mehr dargestellten Turbinenradwelle weist die Zentralöffnung 31 der Nabe 9 eine axiale Mitnahmeverzahnung 54 auf.

Die Außenschale 42 des Pumpenrades 38 endet radial innen in einer Nabe 55, welche aus einem mit dickerer Wandstärke versehenen Flansch 56 sowie einem sich anschließenden axialen Anschlußstutzen 57 besteht, welcher mit einer zentrischen Lagerhülse 58 durch eine Reibschweißverbindung 59 starr verbunden ist.

Das Leitrad 40 ist in bekannter Weise über eine Freilauf-Kupplung 60 an einer nicht mehr dargestellten nicht drehenden Statorwelle abstützbar, wobei die Sekundärseite der Freilauf-Kupplung eine innere Nabe 61 mit einer axialen Mitnahmeverzahnung 62 zur drehfesten Verbindung mit der Statorwelle aufweist.

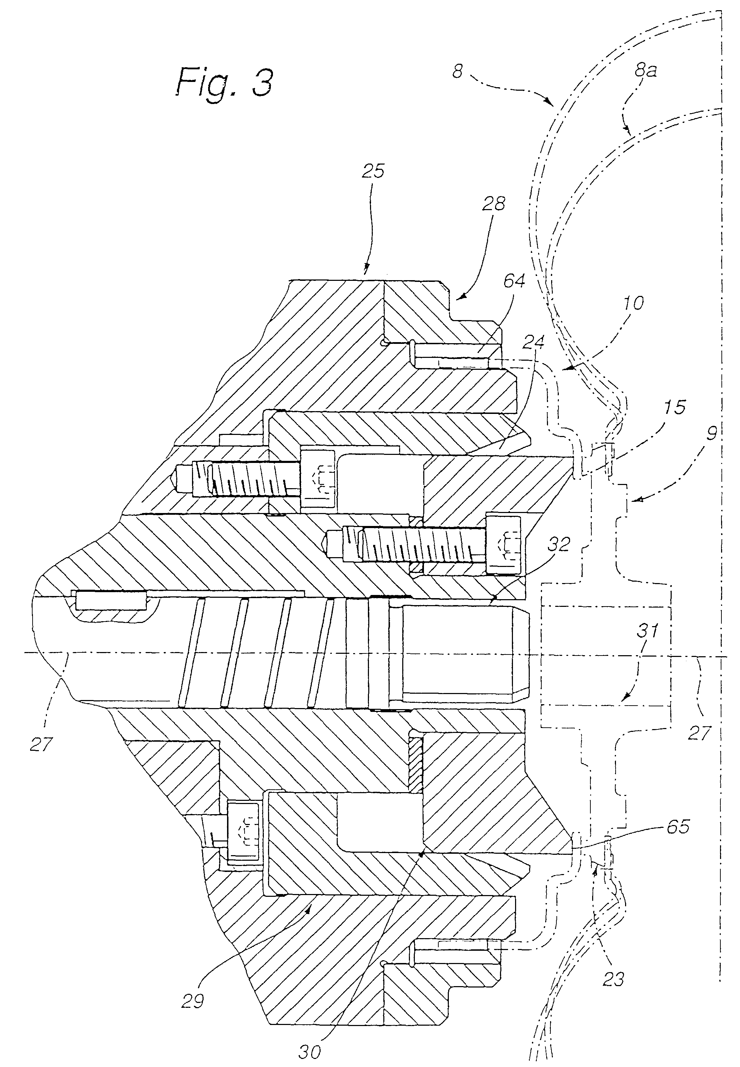

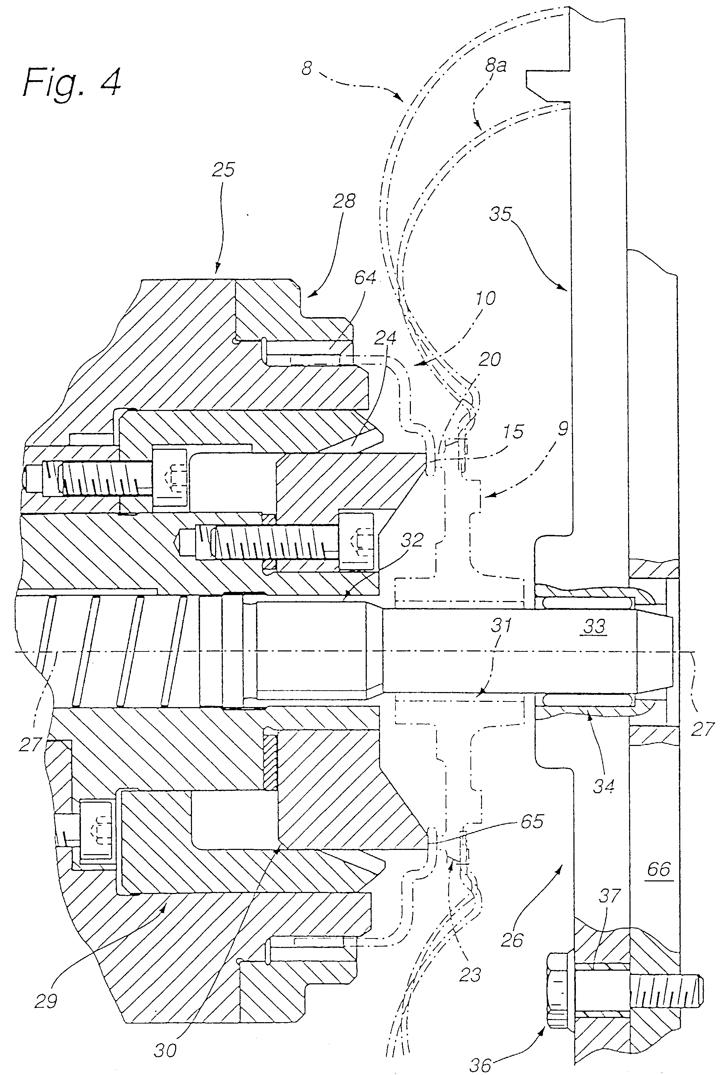

Unter Bezugnahme auf die Fign. 2 bis 4 weist die nicht näher dargestellte Reibschweißmaschine eine drehantreibbare Universal-Aufnahme 25 für die Nabe 9 und den Lamellenträger 10 des Turbinenrades 5 auf. Gemäß Fig. 3 oder 4 kann der Lamellenträger 10 in einen zur Drehachse 27-27 der Universal-Aufnahme 25 konzentrischen ringförmigen Aufnahmeteil 28 formschlüssig und drehfest eingesetzt werden, wobei der Aufnahmeteil 28 Eingriffsflächen 64 aufweist, welche komplementär zu den Axialnuten 63 (Fig. 1) des Lamellenträgers 10 ausgebildet sind, um Formschlüssigkeit für die Mitnahme des Lamellenträgers 10 zu erzielen. Der Aufnahmeteil 28 ist im übrigen zur Universal-Aufnahme 25 bewegungsfest angeordnet.

Zur Erzeugung der teileseitigen Formschlußflächen 23 weist die Universal-Aufnahme 25 einen weiteren ringförmigen Aufnahmeteil 29 auf, welcher an seinem den Fügeteilen zugekehrten Stirnende mit den Gegen-Formschlußflächen 24 versehen ist, welche zum Drehantrieb der Nabe 9 dienen und bspw. beim Stauchvorgang die Formschlussflächen 23 in den Flansch 16 der Nabe 9 prägen können. Der Aufnahmeteil 29 ist relativ zur Drehachse 27-27 konzentrisch und relativ zur Universal-Aufnahme 25 drehfest und axial verschiebbar sowie relativ zum Aufnahmeteil 28 radial innenliegend angeordnet.

Die Universal-Aufnahme 25 weist weiterhin einen Stauchring 30 auf, welcher an seinem den Fügeteilen zugekehrten Stirnende mit einer radialen Abstützfläche 65 für die axiale Abstützung des Ansatzes 20 des Flansches 16 beim Reibschweißen von Ansatz 13 und Flansch 14 (Fig. 2) oder für die axiale Abstützung des Flansches 15 beim Reibschweißen von Flansch 15 und Ansatz 20 (Fign. 3 oder 4) versehen ist. Der Stauchring 30 ist relativ zur Drehachse 27-27 konzentrisch und relativ zur Universal-Aufnahme 25 bewegungsfest sowie relativ zum Aufnahmeteil 29 radial innenliegend angeordnet.

Die Universal-Aufnahme 25 weist für die Zentrierung der Nabe 9 einen zylindrischen Zentrierdorn 32 auf, welcher in die Zentralöffnung 31 der Nabe 9 einfahrbar ist. Der Zentrierdorn 32 ist relativ zur Drehachse 27-27 koaxial und relativ zur Universal-Aufnahme 25 drehfest und axial verschiebbar sowie relativ zum Stauchring 30 radial innenliegend angeordnet.

Bei der Ausführungsform der Fig. 4 weist der Zentrierdorn 32 an seinem ausfahrbaren Ende einen Zentrierzapfen 33 auf, welcher relativ zur Drehachse 27-27 koaxial und relativ zum Zentrierdorn 32 bewegungsfest angeordnet ist. Der Zentrierzapfen 33 weist eine solche Länge auf, daß er während des Schweißvorganges ständig durch eine Lageranordnung 34 gegenüber einer Adapterplatte 35 abgestützt ist, über welche das Turbinenrad 5 - von dem jeweils nur die Außenkontur der Außenschale 8 (bzw. bei einem kleineren Wandlerdurchmesser der Außenschale 8a) strichpunktiert angedeutet ist - an einer Grundplatte 66 einer nichtdrehenden, in den Richtungen der Drehachse 27-27 jedoch verlagerbaren Aufnahme 26 der Reibschweißmaschine gehaltert ist. Die Adapterplatte 35 ist mittels Befestigungsschrauben 36 an der Grundplatte 66 unter Verwendung je einer Kunststoffbuchse 37 so eingespannt, daß die Adapterplatte 35 gegenüber der Grundplatte 66 in den zur Drehachse 27-27 senkrechten Richtungen geringfügig elastisch auslenkbar - im übrigen jedoch bewegungsfest angeordnet ist.

Bei der Herstellung wird zunächst der Flansch 14 der Außenschale 8 mit dem Ansatz 13 des Flansches 16 verschweißt. Zu diesem Zweck wird die Nabe 9 auf den herausgefahrenen Zentrierdorn 32 aufgesetzt und an der Abstützfläche 65 des Stauchringes 30 in Anlage gebracht. Anschließend wird die Aufnahme 26 mit der in der Adapterplatte 35 eingespannten Außenschale 8 an die Nabe 9 herangefahren und unter Anlegen des Flansches 14 an den Ansatz 13 in Arbeitsstellung fixiert. Danach wird das Aufnahmeteil 29 mit den Gegen-Formschlußflächen 24 bis zur Anlage am Flansch 16 herausgefahren, um die teileseitigen Formschlußflächen 23 in den Flansch 16 einzuprägen, wobei die Universal-Aufnahme 25 entweder noch stillsteht oder bereits drehangetrieben ist. Der anschließende Stauch- und Schweißvorgang beim Reibschweißen ist bekannt.

Anschließend werden der Flansch 15 und der Ansatz 20 durch Reibschweißen verbunden. Zu diesem Zweck werden die Aufnahme 26 mit der Anordnung "Außenschale 8-Nabe 9" zurückgefahren und der Aufnahmeteil 29 sowie der Zentrierdorn 32 eingefahren, so daß der Lamellenträger 10 in den Aufnahmeteil 28 eingesetzt und danach der Ansatz 20 der Nabe 9 durch Heranfahren der Aufnahme 26 in Anlage am Flansch 15 gebracht werden kann, wobei bei der Ausführungsform der Fig. 4 der Zentrierzapfen 33 bei den vorstehend beschriebenen Arbeitsmanövern der Aufnahme 26 ständig in der Lageranordnung 34 geführt sein kann. Der sich anschließende Schweiß- und Stauchvorgang beim Reibschweißen ist bekannt.

## Patentansprüche

1. Turbinenrad (5) eines hydrodynamischen Drehmomentwandlers (6) mit einer Überbrückungskupplung (47), und mit einer Turbinenschaufeln (7) halternden Außenschale (8), einer Nabe (9) zur drehfesten Verbindung der Außenschale (8) mit einer Turbinenradwelle, einem Lamellenträger (10) zur drehfesten Verbindung von Kupplungslamellen (11) mit der Außenschale (8), und bei dem die Außenschale (8) einen mit der Nabe (9) bewegungsfest verbundenen radialen Flansch (14) und der Lamellenträger (10) einen gegenüber der Außenschale (8) bewegungsfest angeordneten radialen Flansch (15) aufweisen, wobei der Flansch (15) des Lamellenträgers (10) gegenüber den Kupplungslamellen (11) radial nach innen versetzt ist und die Nabe (9) an ihrem Außenumfang einen radialen Flansch (16) mit einer zylindrischen Außenmantelfläche (17) und mit einer dem Flansch (15) des Lamellenträgers (10) zugekehrten, in einer drehachsnormalen Flanschebene (18-18) liegenden Stirnfläche (19) aufweist,
**dadurch gekennzeichnet,**
daß die Nabe (9) auf ihrer der Außenschale (8) zugekehrten Stirnseite einen zur Drehachse (12-12) des Turbinenrades (5) konzentrischen axialen Ansatz (13) aufweist, der zur Verbindung mit dem Flansch (14) der Außenschale (8) verwendet ist, daß die dem Lamellenträger (10) zugekehrte Stirnfläche (19) des Flansches (16) der Nabe (9) einen zur Drehachse (12-12) konzentrischen axialen Ansatz (20) aufweist, dessen Außendurchmesser (21) kleiner als der Durchmesser (22) der Außenmantelfläche (17) des Flansches (16) der Nabe (9) ist, daß sowohl der Flansch (15) des Lamellenträgers (10) mit dem Ansatz (20) an der zugekehrten Stirnfläche (19) des Flansches (16) der Nabe (9) als auch der Flansch (14) der Außenschale (8) mit dem Ansatz (13) auf der anderen Stirnseite des Flansches (16) der Nabe (9) jeweils durch Reibschweißen verbunden sind, und daß am Flansch (16) der Nabe (9) im Übergangsbereich zwischen dem Außenmantel (17) und der dem Flansch (15) des Lamellenträgers (10) zugekehrten Stirnfläche (19) die teileseitigen Formschlußflächen (23, Fig. 2) für den Drehantrieb der Nabe (9) durch Gegen-Formschlußflächen (24) der die Nabe (9) fassenden und drehangetriebenen Aufnahme (25) der Reibschweißmaschine ausgebildet sind.

2. Turbinenrad nach Anspruch 1,
**dadurch gekennzeichnet,**
daß die teileseitigen Formschlußflächen (23) nach einem Verfahren zum Reibschweißen ausgebildet sind, bei dem die Nabe (9) und die Außenschale (8) in axialer Gegenüberstellung in jeweils gesonderten Aufnahmevorrichtungen (25 und 26) verdrehsicher gehaltert werden, von denen wenigstens die eine drehantreibbar ist, und bei dem die Nabe (9) und die Außenschale (8) durch gegenseitige Verdrehung unter axialer Anpressung aufgrund von Reibungserwärmung auf teigigen Zustand erwärmt und dadurch verschweißt und relativ zueinander stillgesetzt werden, wobei zur verdrehsicheren Aufnahme zumindest der Nabe (9) in der entsprechenden Aufnahmevorrichtung (25) im Bereich der Aufnahmefläche (17) der Nabe (9) in der Aufnahmevorrichtung (25) regelmäßige Formschlußflächen (23) angearbeitet werden, die mit entsprechenden Gegen-Formschlußflächen (24) in der Aufnahmevorrichtung (25) derart korrespondieren, daß die Nabe (9) formschlüssig-verdrehsicher in der Aufnahmevorrichtung (25) gehaltert ist, wobei die teileseitigen Formschlußflächen (23) erst in der Aufnahmevorrichtung (25) durch einen Prägevorgang seitens der in der Aufnahmevorrichtung (25) angebrachten schneidenartig ausgebildeteten Gegen-Formschlußflächen (24) erzeugt werden, wobei die - in einem Axialschnitt gesehen - unter einem spitzen Winkel zur Axialkraftrichtung angeordneten schneidenartigen Gegen-Formschlußflächen (24) sich kraftübersetzend in eine umlaufende Werkstückkante eingraben, wobei der Prägevorgang unmittelbar vor dem Reibschweißen durch ein gesondertes axiales Pressen oder Schlagen oder während der Durchführung der Reibschweißung unter Ausnutzung der axialen Anpreßkraft beim Reibschweißen durchgeführt wird.

3. Drehantreibbare Aufnahme für Nabe und Lamellenträger zum Reibschweißen eines Turbinenrades nach Patentanspruch 2,
**dadurch gekennzeichnet,**
daß ein zur Drehachse (27-27) der Aufnahme (25) konzentrisches äußeres Aufnahmeteil (28) zum formschlüssigen drehfesten Fassen des Lamellenträgers (10) relativ zur Aufnahme (25) bewegungsfest angeordnet ist, daß ein zur Drehachse (27-27) der Aufnahme konzentrisches, die schneidenartig ausgebildeten Gegen-Formschlußflächen (24) aufweisendes Aufnahmeteil (29) relativ zur Aufnahme (25) drehfest und axial verschiebbar sowie relativ zum Aufnahmeteil (28) für den Lamellenträger (10) radial innenliegend angeordnet ist, daß ein Stauchring (30), an welchem die Nabe (9) der Außenschale (8) oder der Flansch (15) des Lamellenträgers (10) in der auf die Aufnahme (25) weisenden Richtung der Drehachse (27-27) der Aufnahme abstützbar sind, relativ zur Drehachse (27-27) der Aufnahme konzentrisch und relativ zur Aufnahme (25) bewegungsfest sowie relativ zu dem die Gegen-Formschlußflächen (24) aufweisenden Aufnahmeteil (29) radial innenliegend angeordnet ist, und daß ein in die Zentralöffnung (31) der Nabe (9) der Außenschale (8) einfahrbarer zylindrischer Zentrierdorn (32) relativ zur Drehachse (27-27) der Aufnahme Koaxial und relativ zur Aufnahme (25) sowohl drehfest als auch axial verschiebbar sowie relativ zu dem Stauchring (30) radial innenliegend angeordnet ist.

4. Vorrichtung zum Reibschweißen eines Turbinenrades nach den Patentansprüchen 1 bis 3 mit einer nichtdrehenden , in den Richtungen der Drehachse verlagerbaren Aufnahme für die Außenschale,
**dadurch gekennzeichnet,**
daß der Zentrierdorn (32) an seinem entgegengesetzt zu seiner drehantreibbaren Aufnahme (25) liegenden Ende einen zur Drehachse (27-27) der Aufnahme oaxial angeordneten Zentrierzapfen (33) aufweist, der durch eine Lageranordnung (34) gegenüber der Aufnahme (26) für die Außenschale (8) zentriert ist.

5. Vorrichtung nach Anspruch 4,
**dadurch gekennzeichnet,**
daß die Aufnahme (26) für die Außenschale (8) eine Adapterplatte (35) aufweist und die Außenschale (8) relativ zur Drehachse (27-27) zentrisch und feststehend sowie in der auf die Aufnahme (26) der Außenschale (8) weisenden Richtung der Drehachse (27-27 ) der Aufnahme bewegungsfest jeweils an der Adapterplatte (35) gehaltert ist, und daß die Adapterplatte (35) sowohl die Lageranordnung (34) für den Zentrierzapfen (33) haltert als auch gegenüber der Aufnahme (26) für die Außenschale (8) in den zur Drehachse (27-27) der Aufnahme senkrechten Richtungen begrenzt elastisch auslenkbar - im übrigen jedoch bewegungsfest angeordnet ist.

## Claims

1. Turbine wheel (5) of a hydrodynamic torque converter (6) with a high pressure coupling (47), and with an outer shell (8) which holds turbine blades (7), a hub (9) for rotationally fixed connection of the outer shell (8) to a turbine wheel shaft, a disc carrier (10) for rotationally fixed connection of coupling disks (11) to the outer shell (8), and in which the outer shell (8) has a radial flange (14) which is tightly connected to the hub (9) and the disc carrier (10) has a flange (15) which is radially disposed and tightly fixed in relation to the outer shell (8, whereby the flange (15) of the disc carrier (10) is radially displaced, inwards, in relation to the coupling disks (11), and the hub (9) has, on its outer periphery, a radial flange (16) with a cylindrical outer casing surface (17) and a face (19) which faces the flange (15) of the disc carrier (10) and lies in a flange-plane (18-18) which is normal to the axis of rotation,
**characterized in that**
the hub (9) has, on its face which is directed towards the outer shell (8), an axial recess (13) which is concentric and axial in relation to the axis of rotation (12-12) of the turbine wheel (5), this recess being used for connection of the outer shell (8) to the flange (14), and in that the face (19), of the flange (16) of the hub (9), facing the disc carrier (10), has a shoulder (20) which is concentric and axial in relation to the axis of rotation (12-12), this said shoulder having an outer diameter (21) which is smaller than the diameter (22) of the outer casing surface (17) of the flange (16) of the hub (9), and in that the flange (15) of the disc carrier (10) is connected to the shoulder (20) on the facing side (19) of the flange (16) of the hub (9), and the flange (14) of the outer shell (8) is connected to the shoulder (13) on the other face of the flange (16) of the hub (9), in both of the foregoing cases by means of frictional welding, and in that the part-side interlocking surfaces (23, fig. 2) for rotationally driving the hub (9) through counterlocking surfaces (24) of the uptake means (25), for the friction welding machine, which hold the hub (9), are developed on the flange (17) and on the face (19) directed towards the flange (15) of the disc carrier (10).

2. Turbine wheel in accordance with claim 2,
**characterized in that**
that the part-side interlocking surfaces (23) are formed in accordance with a friction-welding process in which the hub (9) and the outer shell (8) are held, protected against torsion, in axially opposite positions in separate uptake devices (25 and 26), it being possible to rotationally drive at least one of said uptake devices, and in which the hub (9) and the outer shell (8) are fixed in relation to each other through opposite twisting with axial tightening, this causing frictional heating to a plastic state in which they are thereby fixedly welded to each other whereby, for uptake which is protected against torsion of at least the hub (9) in the corresponding uptake device (25) in the area of the uptake surface (17) of the hub (9) in the uptake device (25), regular interlocking surfaces (23) are produced which correspond with associated counterlocking surfaces (24) in the uptake device (25) such that the hub (9) is held, interlocking and protected against torsion, in the uptake device (25), whereby the part-side interlocking surfaces (23) are not produced until they are fashioned in the uptake device (25), by means of an embossing process, on the side of the cutter-type counterlocking surfaces (24) applied in the uptake device, whereby the cutter-type counterlocking faces (24), which, seen in an axial section, are disposed at an acute angle to the direction of axial force, dig, thereby converting force, into the rim of a rotating tool, whereby the embossing process is carried out immediately before the friction-welding, by means of a separate axial application of pressure or by beating, or is carried out during the friction-welding, with use of the axial contact pressure occurring at the time of friction-welding.

3. Rotationally driven uptake means for a hub and a disc carrier for friction-welding a turbine wheel in accordance with patent claim 2,
**characterized in that**
an outer uptake section (28), which is concentric in relation to the axis of rotation (27-27) of the uptake means (25), for interlocking, rotationally fixed holding of the disc carrier (10), is tightly disposed in relation to the means of uptake (25), and in that an uptake section (29), which is concentric in relation to the axis of rotation (27-27) and has cutter-type developed counterlocking surfaces (24), is rotationally fixed, and axially displaceable, in relation to the uptake means (25), and is radially, inwardly disposed in relation to the uptake section (28) for the disc carrier (10), and in that a compression ring (30), on which the hub (9) of the outer shell (8) or the flange (15) of the disc carrier (10) can be supported in the direction of the axis of rotation (27-27) pointing towards the uptake means (25), is disposed concentrically in relation to the axis of rotation (27-27) of the uptake means and is tightly disposed in relation to the uptake means (25) and is radially, inwardly disposed in relation to uptake section (29) which has counterlocking surfaces (24), and in that a cylindrical centering spindle (32), which can be introduced into the central opening (31) of the hub (9) of the outer shell (8), is disposed coaxially in relation to the axis of rotation (27-27) of the uptake means, and is disposed such that it is rotationally fixed, and can be displaced axially, in relation to the uptake means (25), and is disposed radially, inwardly, in relation to the compression ring (30).

4. Device for friction-welding a turbine wheel in accordance with patent claims 1 to 3, with a non-rotating uptake means, which can be displaced in the direction of the axis of rotation, for the outer shell,
**characterized in that**
the centering spindle (32) has, on its end lying opposite its rotationally drivable uptake means (25), a centering pin (33) which is coaxially disposed in relation to the axis of rotation (27-27) of the uptake means and which is centered in relation to the uptake means (26) for the outer shell (8), through a bearing arrangement (34).

5. Device in accordance with claim 4,
**characterized in that**
the uptake means (26), for the outer shell (8), has an adaptor plate (35), and the outer shell (8) is held centrally and in fixed state, on the adaptor plate (35), in relation to the axis of rotation (27-27), and is tightly held, on the adaptor plate (35), in the direction of the axis of rotation (27-27) pointing towards the uptake means (26), and in that the adaptor plate (35) holds the bearing arrangement (34) for the centering pin (33) and is also disposed such that, in the vertical directions in relation to the axis of rotation (27-27), elastic inclination is possible to a limited extent - it nevertheless being fixedly disposed.

## Revendications

1. Roue de turbine (5) d'un convertisseur de couple (6) hydrodynamique comprenant un embrayage de blocage (47), et une coque extérieure (8) supportant des aubes (7) de turbine, un moyeu (9) pour la liaison solidaire en rotation de la coque extérieure (8) avec un arbre de roue de turbine, comprenant un porte-disques (10) pour la liaison solidaire en rotation de disques (11) d'embrayage avec la coque extérieure (8), roue de turbine dans laquelle la coque extérieure (8) comprend une collerette (14) radiale reliée rigidement au moyeu (9), roue dans laquelle le porte-disques (10) comprend une collerette (15) radiale disposée rigidement par rapport à la coque extérieure (8), où la collerette (15) du porte-disques (10) est décalée radialement vers l'intérieur, par rapport aux disques d'embrayage (11), et dans laquelle le moyeu (9), au niveau de sa circonférence extérieure, comprend une collerette radiale (16) dotée d'une surface périphérique extérieure (17) cylindrique et d'une surface frontale tournée vers la collerette (15) du porte-disques (10), se trouvant dans un plan de collerette (18-18) normal à l'axe de rotation,
caractérisée en ce que le moyeu (9) comprend, sur son côté frontal tourné vers la coque extérieure (8), un bossage (13) axial concentrique par rapport à l'axe de rotation (12-12) de la roue (5) de turbine, lequel bossage est utilisé pour faire la liaison avec la collerette (14) de la coque extérieure (8), en ce que la surface frontale (19), tournée vers le porte-disques (10), de la collerette (16) du moyeu (9) comprend un bossage axial (20), concentrique par rapport à l'axe de rotation (12-12), bossage dont le diamètre extérieur (21) est plus petit que le diamètre (22) de la surface périphérique extérieure (17) de la collerette (16) du moyeu (9), en ce que la collerette (15) du porte-disques (10) est reliée au bossage (20) formé sur la surface frontale (19) de la collerette (16) du moyeu (9), tout comme la collerette (14) de la coque extérieure (8) est reliée au bossage (13) formé sur l'autre côté frontal de la collerette (16) du moyeu (9), chaque collerette étant reliée par soudage par frottement, et en ce que, au niveau de la collerette (16) du moyeu (9), dans la zone de transition entre la surface périphérique extérieure (17) et la surface frontale (19) tournée vers la collerette (15) du porte-disques (10), les surfaces à sûreté de forme (23, figure 2), côté pièces, pour l'entraînement en rotation du moyeu (9) sont formées par des contre-surfaces à sûreté de forme (24) du support (25) comprenant le moyeu (9) et entraîné en rotation, de la machine de soudage par frottement.

2. Roue de turbine selon la revendication 1, caractérisée en ce que les surfaces à sûreté de forme (23), côté pièces, sont constituées selon un procédé pour le soudage par frottement, procédé dans lequel le moyeu (9) et la coque extérieure (8) sont fixés, bloqués en rotation, dans une position axiale opposée, respectivement dans des dispositifs supports séparés (25 et 26), dont au moins un dispositif peut être entraîné en rotation, et procédé dans lequel le moyeu (9) et la coque extérieure (8), par rotation réciproque sous l'effet de la pression de contact axiale, en raison de l'échauffement par frottement, sont chauffés et transformés en un état pâteux, et de ce fait soudés et immobilisés l'un par rapport à l'autre, où des surfaces à sûreté de forme (23) régulières sont constituées pour supporter, bloqué en rotation, au moins le moyeu (9) dans le dispositif support (25) correspondant dans la zone de la surface support (17) du moyeu (9) du dispositif support (25), lesquelles surfaces à sûreté de forme correspondent à des contre-surfaces de sûreté de forme (24) appropriées dans le dispositif support (25), de façon telle que le moyeu (9) est fixé, bloqué en rotation par sûreté de forme, dans le dispositif support (25), où les surfaces à sûreté de forme (23), côté pièces, ne sont produites que dans le dispositif support (25) par un processus d'emboutissage du côté des contre-surfaces à sûreté de forme (24) formées par découpe dans le dispositif support (25), où - vues suivant une coupe axiale - les contre-surfaces à sûreté de forme (24), disposées par découpe suivant un angle aigu par rapport à la direction de la force axiale, s'enfoncent, en transmettant la puissance, dans un bord circulaire de pièce d'usinage, où le processus d'emboutissage est effectué immédiatement avant le soudage par frottement, par un processus distinct de pression axiale ou par un processus distinct de percussion, ou bien le processus d'emboutissage est effectué pendant la réalisation du processus de soudage par frottement en utilisant la force de pression axiale exercée lors du processus de soudage par frottement.

3. Support pouvant être entraîné en rotation pour le moyeu et le porte-disques pour le soudage par frottement d'une roue de turbine selon la revendication 2, caractérisé en ce qu'une pièce support extérieure (28), concentrique par rapport à l'axe de rotation (27-27) du support (25), est disposée rigidement par rapport au support (25) pour contenir le porte-disques (10) solidaire en rotation par sûreté de forme, en ce qu'une pièce support (29), concentrique par rapport à l'axe de rotation (27-27) du support, présentant les contre-surfaces à sûreté de forme (24), formées par découpe, est disposée, radialement vers l'intérieur, en étant solidaire en rotation par rapport au support (25) et en pouvant être mobile axialement par rapport à la pièce support (28) du porte-disques (10), en ce qu'un anneau de compression (30), sur lequel le moyeu (9) de la coque extérieure (8) ou la collerette (15) du porte-disques (10) peuvent être en appui dans la direction, orientée vers sur le support (25), de l'axe de rotation (27-27) du support, sont disposés, radialement à l'intérieur, en étant concentriques par rapport à l'axe de rotation (27-27) du support et en étant rigides par rapport au support (25) et par rapport à la pièce support (29) comprenant les contre-surfaces à sûreté de forme (24), et en ce qu'un mandrin de centrage (32) cylindrique, disposé radialement à l'intérieur et pouvant être introduit dans l'ouverture centrale (31) du moyeu (9) de la coque extérieure (8), est disposé de façon coaxiale par rapport à l'axe de rotation (27-27) du support, et en étant solidaire en rotation et mobile axialement aussi bien par rapport au support (25) que par rapport à l'anneau de compression (30).

4. Dispositif de soudage par frottement d'une roue de turbine selon l'une quelconque des revendications 1 à 3, en ayant un support non rotatif pour la coque extérieure, mobile dans les directions de l'axe de rotation, caractérisé en ce que le mandrin de centrage (32) comprend, au niveau de son extrémité se trouvant à l'opposé de son support (25) pouvant être entraîné en rotation, un tourillon de centrage (33) disposé en étant coaxial par rapport à l'axe de rotation (27-27) du support, lequel tourillon de centrage est centré par un palier (34), par rapport au support (26) de la coque extérieure (8).

5. Dispositif selon la revendication 4, caractérisé en ce que le support (26) de la coque extérieure (8) comprend une plaque adaptateur (35) et en ce que la coque extérieure (8), centrée et fixe par rapport à l'axe de rotation (27-27), et rigide dans la direction, orientée vers le support (26) de la coque extérieure (8), de l'axe de rotation (27-27) du support, est tenue à chaque fois sur la plaque adaptateur (35), et en ce que la plaque adaptateur (35) fixe aussi le palier (34) du tourillon de centrage (33), de même qu'elle est disposée par rapport au support (26) de la coque extérieure (8), de façon à pouvoir être décalée élastiquement, de manière limitée, dans les directions perpendiculaires à l'axe de rotation (27-27) du support, ladite plaque étant disposée, pour le reste, de façon rigidement bloquée.
